**Europäisches Patentamt**

**European Patent Office**

**Office européen des brevets**

(19)

(11) Veröffentlichungsnummer: **0 003 606**
**A2**

(12) # EUROPÄISCHE PATENTANMELDUNG

(21) Anmeldenummer: **79100399.9**

(51) Int. Cl.²: **G 01 C 22/02, G 07 C 7/00**

(22) Anmeldetag: **12.02.79**

(30) Priorität: **13.02.78 DE 2805999**

(43) Veröffentlichungstag der Anmeldung: **22.08.79**
**Patentblatt 79/17**

(84) Benannte Vertragsstaaten: **BE CH FR GB IT LU NL SE**

(71) Anmelder: **Battelle-Institut e.V., Am Römerhof 35,
D-6000 Frankfurt/Main 90 (DE)**

(72) Erfinder: **Tries, Götz, Stoltzestrasse 72, D-6078 Neu-
Isenburg (DE)**

(74) Vertreter: **Blum, Klaus-Dieter, Dipl.-Ing. et al, Am
Römerhof 35, D-6000 Frankfurt/Main 90 (DE)**

(54) **Vorrichtung für Kraftfahrzeuge zur Ermittlung der zurückgelegten Wegstrecke.**

(57) Die erfindungsgemäße Vorrichtung dient zur Ermittlung der von einem Kraftfahrzeug zurückgelegten Wegstrecke. Sie ist unabhängig von dem üblicherweise eingebauten Kilometerzähler, jedoch abhängig von dem Vorhandensein eines Tachometers oder Schrittmotors im Tachometer.

Der magnetische Durchgriff der im Tachometer erzeugten Signale wird ausgenutzt. Ein auf die Tachometerscheibe aufsetzbarer magnetischer Meßwertaufnehmer, z. B. ein Hall-Generator, liefert ein zur Umdrehung der Tachometerwelle oder den Signalen des Schrittmotors im Tachometer proportionales Wechsel- oder Pulssignal nach elektronischer Aufbereitung an einen elektronischen Zähler. Die Anzahl der Signale dient dann als Maß für die zurückgelegte Wegstrecke.

Der Meßwertaufnehmer wird beispielsweise mit Hilfe eines Saugnäpfchens auf der Tachoscheibe lösbar befestigt. Daher läßt sich die Vorrichtung nachträglich in das Kraftfahrzeug einsetzen und nach Bedarf wieder entnehmen.

Fig. 1a

Fig. 1b

0003606

389-39 - 38/77 - KDB/UMA          8. Februar 1979


BATTELLE - INSTITUT E.V., Frankfurt/Main


==========================================
Vorrichtung für Kraftfahrzeuge zur Ermittlung der zurückgelegten Wegstrecke

==========================================


Die Erfindung bezieht sich auf eine Vorrichtung, die für Kraftfahrzeuge mit Wirbelstrom-Tachometern, mit Schrittmotor-Kilometerzählern oder ähnlichem vorgesehen ist und zur Ermittlung der
zurückgelegten Wegstrecke dient. Es handelt sich dabei um eine
bei Bedarf ohne großen Aufwand nachträglich einzubauende und wieder zu entfernende elektrische Vorrichtung, die unabhängig von
dem im Kraftfahrzeug eingebauten Kilometerzähler für bestimmte
Zwecke verwendet werden kann.

- 2 -

Es ist schon bekannt, ein zusätzliches Meßrad an ein Kraftfahrzeug anzubringen, was jedoch nicht so ganz einfach ist und einigen Montageaufwand erfordert. Die Verwendung von nach dem Doppler-Prinzip betriebenen Radaranlagen, wie sie zur Geschwindigkeitsüberwachung im Straßenverkehr üblich sind, ist ebenfalls grundsätzlich möglich, doch wäre dies mit einem erheblichen Aufwand für die Sende-, Empfangs- und Auswertungseinheiten verbunden. Einer mechanischen Ankopplung einer Zusatzvorrichtung an die Tachometerwelle steht entgegen, daß dies im allgemeinen einen rechtlich unzulässigen Eingriff in das Kraftfahrzeug bedeuten würde.

Der vorliegenden Erfindung liegt nun die Aufgabe zugrunde, eine möglichst einfache Vorrichtung der eingangs genannten Art zu schaffen, die mit wenigen Handgriffen und möglichst sogar vom Laien ohne handwerkliches Geschick in ein Fahrzeug eingebaut und, sobald sie nicht mehr benötigt wird, ebenso einfach wieder entfernt werden kann. Ein Eingriff in die Mechanik oder Elektrik des Kraftfahrzeuges sollte vermieden werden. Außerdem sollte der Meßwert im Fahrgastraum sofort zur Verfügung stehen.

Es hat sich nun gezeigt, daß sich diese Aufgabe mit der im beigefügten Anspruch 1 beschriebenen Vorrichtung in erstaunlich einfacher Weise lösen läßt. Einige besonders vorteilhafte Ausführungsarten der Erfindung sind in den Ansprüchen 2 - 5 beschrieben.

Der Erfindung liegt die Erkenntnis zugrunde, daß sich sowohl bei den üblichen Wirbelstrom-Tachometern als auch bei den bekannten elektronischen Tachometern auf der Tachometerscheibe ein schwaches magnetisches Feld feststellen läßt, von dem wegabhängige Signale abgeleitet werden können. Die beim Wirbelstrom-Tachometer innerhalb des Tachometers auf der Tachometerwelle sitzenden Dauermagnete besitzen nämlich einen gewissen magnetischen Durchgriff nach außen. Deshalb entsteht an den Klemmen eines auf der Tachometerscheibe aufgesetzten magnetischen Meßwertaufnehmers ein Wechselspannungssignal, dessen Frequenz von der Bewegung der Magneten im Tachometer und damit von der Umdrehungsgeschwindigkeit der Tachometerwelle bzw. von der Geschwindigkeit des Kraftfahrzeuges abhängig ist. Nach Verstärkung und Begrenzung des Wechselsignals entstehen Pulse, die erfindungsgemäß gezählt werden. Der Zählerstand ist dann ein direktes Maß für den zurückgelegten Weg des Kraftfahrzeuges.

Die bekannten elektronischen Tachometer sind mit Kilometerzählern ausgerüstet, die von Schrittmotoren weitergestellt werden. Die zur Weiterschaltung der Schrittmotoren benötigten Impulse lassen sich ebenfalls durch den außen auf die Tachometerscheibe aufgesetzten Meßwertaufnehmer in elektrische Pulssignale umsetzen, die nach Aufbereitung mit Hilfe des elektronischen Zählers wiederum als Maß für die zurückgelegte Wegstrecke ausgewertet werden können.

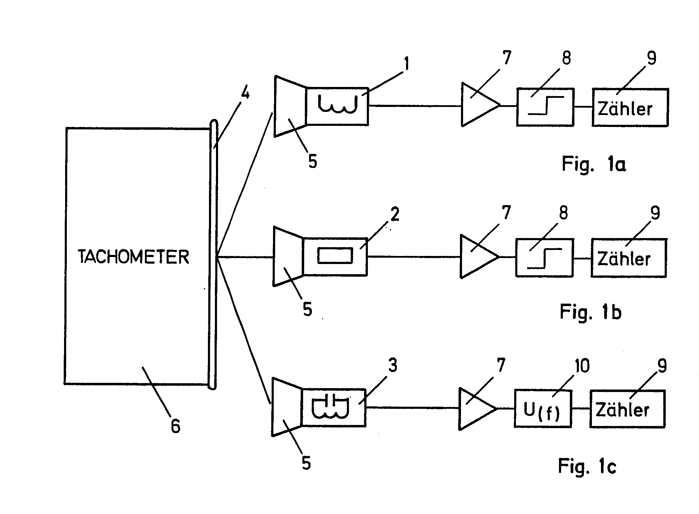

Weitere Merkmale, Vorteile und Anwendungsmöglichkeiten der Erfindung gehen aus der folgenden Beschreibung weiterer Einzelheiten anhand der beigefügten schematischen Darstellung hervor. Es zeigen die Figuren 1a bis 1c drei verschiedene Ausführungsarten der erfindungsgemäßen Vorrichtung in Verbindung mit einem Kraftfahrzeugtachometer.

Nach Figur 1a besteht der magnetische Meßwertaufnehmer 1 im wesentlichen aus einer Induktionsspule, die z.B. mit einem kleinen Saugnäpfchen 5, mit Hilfe einer Klebefolie oder dgl. von außen, d.h. vom Fahrgastraum aus auf die Scheibe 4 eines Wirbelstrom-Tachometers 6 aufgesetzt werden kann. Im vorliegenden Fall besteht der Meßwertaufnehmer 1 aus einer Spule von ca. 500 mH. Nach Aufbereitung, d.h. hier Verstärkung und Amplitudenbegrenzung des geschwindigkeitsabhängigen Wechselsignals entstehen Pulse, die als Maß für die zurückgelegte Wegstrecke gezählt werden. In Figur 1a ist der symbolisch dargestellte Verstärker mit der Bezugsziffer 7, der Amplitudenbegrenzer mit 8 und der Zähler mit 9 bezeichnet.

In dem Ausführungsbeispiel nach Figur 1b wird als Meßwertaufnehmer ein Hall-Generator 2 verwendet, der ebenfalls mit einem Saugkopf 5 oder durch Ankleben auf der Tachometerscheibe 4 befestigt werden kann und ein Wechselsignal liefert, das nach Aufbereitung zählbare, in der Anzahl der zurückgelegten Wegstrecke proportionale Pulse liefert. Der magnetische Meßwertaufnehmer 3 in der Variante der Erfindung gemäß Figur 1c besteht im wesentlichen aus einem Schwingkreis, der durch ein äußeres Magnetfeld, hier durch das Streufeld des Tachometers 6, verstimmt werden kann. Nach Aufbereitung des durch das magnetische Streufeld des Tachometers 6 frequenzmodulierten Signals in den Stufen 7 und 10 - die Stufe 10 ist hier ein Frequenzdiskriminator - liegen wiederum zählbare, der zurückgelegten Wegstrecke zahlenmäßig entsprechende Pulse vor.

Da der magnetische Durchgriff gering ist und das vom Meßwertaufnehmer 1, 2 oder 3 ermittelte Signal gegebenenfalls schwach im Vergleich zu einem eventuellen Störsignal sein kann, ist es zweckmäßig,einen gleichartigen Meßwertaufnehmer im Kraftfahrzeug derart zu plazieren, daß dieser die Störsignale in gleicher Weise aufnimmt, vom Tachometer jedoch abgeschirmt ist. Durch Zusammenschaltung beider Meßwertaufnehmer lassen sich dann in bekannter Weise die Störsignale weitgehend kompensieren.

Wie die vorstehenden Erläuterungen zeigen, läßt sich die erfindungsgemäße Vorrichtung in mehreren Varianten mit Hilfe bekannter, handelsüblicher Bausteine aufbauen. Der erforderliche Aufwand ist gering. Da der Meßwertaufnehmer z.B. über einen Saugnapf-Adapter oder über eine Klebefolie auf die Tachometerscheibe aufgesetzt wird, ist auch ein kurzzeitiger Einsatz der erfindungsgemäßen Vorrichtung und z.B. die Weitergabe des Gerätes an ein anderes Fahrzeug jederzeit möglich.

Die Anpassung des Gerätes an den Tachometer- oder Fahrzeugtyp bzw. die Zuordnung von Impulszahl und zurückgelegter Wegstrecke läßt sich am einfachsten durch Einstellen des Zählers realisieren.

Patentansprüche

1. Vorrichtung zur Ermittlung der zurückgelegten Wegstrecke für Kraftfahrzeuge mit Wirbelstrom-Tachometern, mit Schritt-Motor-Kilometerzählern oder ähnlichem, dadurch gekennzeichnet, daß sie einen magnetischen Meßwertaufnehmer (1, 2, 3) aufweist, der auf die Tachometerscheibe (4) aufsetzbar ist und der ein der Umdrehung der Tachometerwelle bzw. der Weiterschaltung des Schritt-Motors proportionales Wechsel- oder Pulssignal an einen elektronischen Zähler (9) liefert, der die aus dem Wechsel- oder Pulssignal nach Aufbereitung gewonnenen Pulse als Maß für die zurückgelegte Wegstrecke zählt.

2. Vorrichtung nach Anspruch 1, dadurch gekennzeichnet, daß der Meßwertaufnehmer eine Induktionsspule (1) ist.

3. Vorrichtung nach Anspruch 1, dadurch gekennzeichnet, daß der Meßwertaufnehmer ein Hall-Generator (2) ist.

4. Vorrichtung nach Anspruch 1, dadurch gekennzeichnet, daß der Meßwertaufnehmer im wesentlichen aus einem durch ein äußeres Magnetfeld verstimmbaren Schwingkreis (3) besteht und daß zur Aufbereitung des frequenzmodulierten Signals ein nachgeschalteter Frequenzdiskriminator (10) vorgesehen ist.

5. Vorrichtung nach einem der Ansprüche 1 - 4, dadurch gekennzeichnet, daß zur Unterdrückung von Störsignalen ein zweiter
Meßwertaufnehmer vorgesehen ist, der in der Nähe des ersten,
jedoch abgeschirmt von dem magnetischen Streufeld des Tachometers bzw. des Schrittzählers angeordnet ist und mit dem die
Störsignale kompensierbar sind.

TACHOMETER

4

5

1

7

8

9

Zähler

Fig. 1a

6

2

7

8

9

Zähler

Fig. 1b

3

7

10

U(f)

9

Zähler

Fig. 1c

5

0003606